# EUROPEAN PATENT SPECIFICATION

(11) **EP 1 829 719 B1**
(45) Date of publication and mention of the grant of the patent: **02.12.2009**
(21) Application number: 06004159.7
(22) Date of filing: 01.03.2006
(51) Int. Cl.: B60G 17/015, B60G 21/00

(54) **Vehicle with tilting suspension system**
Seitlich neigbares Fahrzeug
Véhicule comprenant un système de suspension permettant l'inclinaison du véhicule

(43) Date of publication of application: 05.09.2007
(73) Proprietor: Fondazione Torino Wireless, 10129 Torino (IT); POLITECNICO DI TORINO, 10129 Torino (IT)
(72) Inventor: Tonoli, Andrea, Avigliana (Torino) (IT); Festini, Andrea, Collegno (Torino) (IT); Cavalli, Fabio, Alessandria (IT); Carabelli, Stefano, Cesana Torinese (Torino) (IT); Chiaberge, Marcello, Collegno (Torino) (IT)
(74) Representative: Grünecker, Kinkeldey, Stockmair & Schwanhäusser Anwaltssozietät

(56) References cited:
- FR-A- 2 745 757
- US-A- 2 260 102
- US-B1- 6 250 649

## Description

### FIELD OF THE PRESENT INVENTION

The present invention relates to the field of vehicles with a tilting unit. In particular, the present invention relates to a vehicle with a main body having a longitudinal axis, and with a tilting unit for tilting the main body relative to a vertical plane through the longitudinal axis, whereby the tilting unit comprises an actuator, a control unit and a power provision unit for providing a power transmitting medium via the control unit to the actuator, whereby the control unit is configured to control the power intake of the actuator.

### DESCRIPTION OF THE PRIOR ART

Vehicles being able to tilt, are known of from the prior art. In such vehicles, the tilting can be commanded by the driver directly or by actuators, such as hydraulic actuators. Those vehicles with actuators can be classified into two categories, namely, vehicles with manual tilting and vehicles with tilting units. Vehicles with manual tilting, where the command to the suspension system is provided only by the driver, are known of WO 2004/011324 A1, WO 2005/002957 A1 and WO 99/44136 A1. In those vehicles the driver can control the direct tilting of the vehicle with a footbar or by the position of his body.

WO 2004/011324 A1, an International Application published under the Patent Corporation Treaty, discloses a vehicle with at least three wheels, with a first frame part, also explained as a main body, that is provided with at least two foot boards, and a second frame part. The second frame part is connected to the first frame part in such a way that it can tilt about a tilting axis running in a longitudinal direction, whereby the second frame part comprises a control element and a driver's seat. The tilting unit is connected to the main body and the second frame part, in order to exert a tilting force up on the second frame part of a basis from a control signal. A sensor is connected to the first frame part, for the purpose of measuring a force or a moment exerted by a driver up on the main body and/or to determine the position of the rider relative to the footboard, whereby the sensor is connected on the other hand to the tilting unit and feeds the control signal to the tilting unit. As a tilting unit, a hydraulic cylinder is disclosed.

The International Patent Application published under the Patent Corporation Treaty, WO 2005/002957 A1 discloses a three-wheeled vehicle comprising a frame with an engine, a drive gear and at least one driven wheel at the rear, and two front wheels, which are used in part to steer the vehicle. A transfer frame in the longitudinal direction of the vehicle having a perpendicular frame member is also disclosed therein, as well as spring anchors provided on the frame member for mounting springs.

The International Patent Application WO 99/41136 A1 discloses another three-wheeled vehicle, with a frame capable of inclining when handling a curve. The frame therein has two steering front wheels and one rear wheel comprising a rigid portion and a trapezoidal portion capable of being deformed and in line with the center of gravity of the vehicle and the loads applied therein to be shifted to the inside of the curve which is being run across, whereby the steering is controlled by a suitable linkage and a handle bar, and the side inclination is controlled by the driver by shifting his body.

Vehicles where the tilting is controlled by a servo system are, e.g., disclosed in the European Patent Application EP 0 020 835 A1. Therein, an ultra narrow enclosed motor vehicle is disclosed. This vehicle has a chassis supported by road running wheels which include a main section pivotally connected to a sub-section whereby pivotal movement can take place between the two sections along a pivotal axis extending in the longitudinal direction of the vehicle. A closed-in body structure mounted on one of the chassis sections provides for accommodation for at least one person. A drive means for the vehicles mounted on the other one of the chassis sections. Control means are provided in this vehicle for enabling variable selection of the amount and sense of relative pivotal movement between the two chassis sections. A motor drive and hydraulic pump coupled fluid wise with a valve arrangement. Also pneumatic or electromagnetic coupling means connected to a tilting mechanism are disclosed.

The suspension control system for leaning a vehicle is disclosed in WO 99/47372, also being an International Patent Application. A roll angle control is disclosed as being achieved by selectively causing or preventing changes in a diagonal dimension of a parallelogram. A necessary damping is achieved through a linear hydraulic damper unit placed so, as to resist changes in flexure of a transverse beam spring while allowing roll freedom. The roll angle is disclosed as being controlled either via bicycle-like maneuvering, by an operator, by a device as to selectively control a diagonal dimension as a parallelogram, or via a combination of both.

An unguided vehicle capable of inclination when taking a corner is disclosed in International Patent Application WO 99/12795 A1 in US 6 250 649 or in FR 2 745 757. An active road control is disclosed therein as well.

In the case of vehicles, where the commands are generated by a control system, in the state of the art a control system is known that sends commands to the hydraulic or electric actuators to drive the tilting of the vehicle. Such a control system bases its command output from the information sent by sensors and from driver commands. All of the above described vehicles have a major drawback, namely, if one unit fails, the whole system fails and the vehicle cannot be controlled. This can lead to fatal accidents. If the tilting system with the tilting unit fails, a driver moving his vehicle into a corner, whereby normally the vehicle would tilt, will now not tilt. This changes the dynamical properties of the vehicle considerably. In many cases this will lead to an accident, as the driver will in many cases not be able to control his vehicle during the cornering action.

It is therefore the object of the invention to avoid such unstable dynamical properties of the vehicle, to avoid accidents, especially fatal accidents.

The International Patent Application WO 98/49023 A1 discloses a multi-track curve tilting vehicle. This vehicle comprises a control system for tilting a super-structure. The control system comprises an emergency back-up system which enables the vehicle to operate for at least a given period of time, if the normally effected main system breaks down. Three super-structure positions are possible depending upon the lateral acceleration of the vehicle: maximum left tilt, upright position, and maximum right tilt. The emergency back up system is controlled by means of an inertia mass.

However, this emergency back-up system is using hydraulic fluids which have the drawback of being inflammable. They also have the drawback that any leak in the conduits of the hydraulic fluid would lead to a total failure of the tilting system, and even the emergency back up system.

The hydraulic back up system of WO 98/49023 A1 has the purpose of guaranteeing the safety of the tilting vehicle when the tilting actuators cannot work due to failure. Only failure of one single actuator can be compensated.

It is therefore an object to provide a safe vehicle that is even safely to be controlled by a driver, if the whole tilting unit fails. The loss of control of the vehicle in a curve shall be avoided.

### SUMMARY OF THE INVENTION

According to the present invention, a solution for the above identified objects and problems is achieved for a vehicle according to the preamble of claim 1 and by comprising at least two redundant tilting units.

An electric servo system to drive a suspension system in a tilting vehicle with redundancy characteristics is the consequence. By providing two redundant tilting units as a hot redundant system, it is possible that one tilting unit provides the necessary tilting, if the vehicle begins to corner or ends driving through a corner, even if one tilting unit breaks down. As the tilting units each comprise a control unit, a power provision unit and an actuator, two discreet and independent circuits to provide the tilting power and tilting movement are configured. By hot redundant system, two chains of tilting unit components are to be understood, which work together in normal operation to produce the necessary tilting torque.

Even if one failure happens in one circuitry or chain, the other circuitry or chain, consisting of one tilting unit each, can independently bring the necessary tilting movement to the main body so that no accident happens. The driver can always control his vehicle, as the dynamic properties of the vehicle do not change abruptly.

There are further solutions and special embodiments claimed in the depending claims and explained in the following:

It is especially favorable if the tilting unit is an electronical device, preferably exclusively an electronic device. Loss of the power transmitting medium is avoided and a fire hazard during a crash due to inflammable hydraulic fluid, which is normally oil, is also minimized. The environmental impact of the vehicle is improved.

It is especially preferable, if an actuator being configured as an electronic unit, such as an electromotor, is comprised in one or each tilting unit. Electromotors are inexpensive, reliable elements, without the need of the usage of hydraulic fluid which is oil.

If the control unit comprises a power electric unit and/or an electric circuit unit, the electric circuit unit can trigger the power electric unit and, dependent of the situation, the vehicles can provide the power transmitting medium to the actuator, especially the electromotor.

To have the possibility to independently provide energy via the power transmitting medium to each tilting unit, it is preferable in another embodiment, if the power provision unit comprises an electric power storage, and/or a mechanical energy converter.

If the electrical power storage comprises a battery, power can be easily stored and provided to the actuator via the control unit.

In the case of failure of a battery it is preferable that another embodiment includes a mechanical energy converter, comprising a high voltage AC generator and an AC/DC converter.

In another preferred embodiment, a mechanical energy converter further comprises a controller for monitoring the status and charge condition of the battery, so that dependent of the charge condition and status of the battery the battery can be charged through the controller in combination with the high voltage AC generator and the AC/DC converter. Power can then also be independently applied to either of the control units and either of the actuators. If the electric power storage and the mechanical energy converter of one of the tilting units is also connected to the controller of the other tilting unit in this additional embodiment, a selective powering of each actuator is possible.

It is preferable, in another embodiment, that a power transmitting medium is electricity or an electric current, so that no inflammable power medium is necessary. An electric current is also easy to provide in a vehicle.

If the controller is configured to uncouple the battery from either of the two control units and supply electricity to either of the two control units from the AC/DC converter and a generator, another preferred embodiment is achievable.

To give the driver a feedback of the condition the vehicle is in, it is also desirable that the vehicle comprises a signaling element. The control units, especially the electric circuit units, of the two tilting units are configured to communicate with each other to assure the functionality of at least one of the two tilting devices, so that they can automatically or manually switch to the powering of either of the actuators and the tilting units.

The driver can take preventive action if the signaling element is coupled to at least one electric circuit, preferably both, to signal to the driver of the vehicle malfunction of one or two trigger units, in another preferred embodiment.

In another preferred embodiment, the vehicle comprises a transducer couple between the trigger units and the main body. Normatives and laws in different countries do not impose a redundancy for mechanical parts, but only test their reliability. In a wire tilting servo system a necessity to have redundant systems is great. For bringing the right amount of power to the main body, it is preferable that a transducer transmits the right amount of movement to the main body of the vehicle.

As mechanical parts are, in general, more reliable than electrical parts, and the laws in different countries do not impose the need to have redundant mechanical parts, it is preferable, if only one single transducer, such as a reduction gear, is coupled between the two trigger units on the one side and the main body on the other side, to minimize the weight and costs of the vehicle.

If the transducer comprises a mechanical element, such as a steering shaft or a brake caliper, standard mechanical elements, which are easy to provide and inexpensive, can be used. In another preferred embodiment, the vehicle comprises a first mode switch to choose between a manual or an automatic tilting mode. This feature is preferable, to improve the driving feeling and the safety of the vehicle.

If the vehicle comprises a second mode switch to select the acceleration and/or speed of the tilting unit tilting the vehicle, in this additional preferred embodiment, the performance of the tilting unit can be easily changed. A rapid tilting actuation, such as necessary in sport driving, can be obtained. Also a smooth actuation, such as preferred in normal driving, is also easily realizable.

A rapid tilting actuation can be obtained by a high torque provided by the electromotor or a smooth actuation realized by limiting the motor torque. It is therefore preferable in another embodiment, if the second mode switch is configured to change the torque of the actuator, especially the electromotor.

In another preferred embodiment, the vehicle comprises at least one sensor, such as the current sensor, an accelerometer and/or a position sensor, to deliver data concerning the actual state of the vehicle to one of the control units, preferably especially one of the electric circuit units. Thereby in the automatic mode, achieved by switching the first mode switch to the automatic motor, a precise tilting movement can be achieved. If the sensor is coupled to both electric circuit units, even in the failure of one tilting unit, a high precise tilting movement can be achieved.

To make an override command of the driver possible, it is preferred in another embodiment that the electric circuit unit is configured as an open loop control. If the electric circuit unit is configured as a closed loop control, then the electric circuit unit, also known as an ECU, can conduct the necessary changes and tilt the main body of the vehicle by itself, without explicit instructions by the driver and the thereon based commands.

A combination is realized in another preferred embodiment, wherein both electric circuit units are configured as an open loop control or a closed loop control. By failure of one tilting unit, a change from a manual control modus to an automatic control modus can be realized.

If the tilting unit comprises a recharge unit, configured to recharge the power provision unit, further security is achieved in this additional preferred embodiment.

Another preferred embodiment consists in shunting the electrical connection of the electric motors with a tunable resistance. This mode of operation can be indicated as "passive" as the tilting actuator does not require any external power from the vehicle. Its mechanical output becomes that of a damper that counteracts the titling of the vehicle. This is due to the fact that permanent magnets electric motors can be used as electric generators.

If the electrical terminals of this type of motors are shunted by a resistance the power dissipated in the reistance corresponds to a drag torque to the shaft of the motor. The smaller the shunt resistance the larger the damping action. In this mode of operation the task of controlling the stability of the vehicle must be provided by the driver by acting on the steering or by moving its center of gravity relative to the vehicle. The shunt resistance may be realized by a resistor or by the same control units used to drive the motors in the "active" mode.

The possibility of a "passive" mode improves the safety of the vehicle, as it guarantees the functionality even in the case, when no power can be given to the control units. The minimum amount of electrical power necessary to maintain the operation of the control units may be obtained from the same electric motors that operate in the "passive" mode.

### BRIEF DESCRIPTION OF THE DRAWINGS

In the following, a description will be given with reference to the drawings of particular and/or preferred embodiments of the present invention:

It has, however, to be noted that the present invention is not limited to the embodiments disclosed, but that the embodiments disclosed relate to particular examples of the present invention, the scope of which is defined by the claims, especially claim 1. The drawings show in particular:
Fig. 1 a schematic circuit diagram showing a first embodiment with a transducer and two tilting units, which each include a battery; and
Fig. 2 another schematic circuit diagram of a second embodiment with one transducer, such as a mechanical reduction gear, two redundant tilting units, whereby the actuators therein are selectively powered by a battery or a mechanical energy converter, and also comprise a generator, a converter and a control unit.

### DETAILED DESCRIPTION

While the present invention is described with reference to the embodiments as illustrated in the following detailed description, as well as in the drawings, it should be understood that the following detailed description, as well as the drawings, are not intended to limit the present invention to the particular illustrative embodiments disclosed, but rather that the descriptive illustrative embodiments merely exemplify the various aspects of the present invention, the scope of which is defined by the claims, especially claim 1.

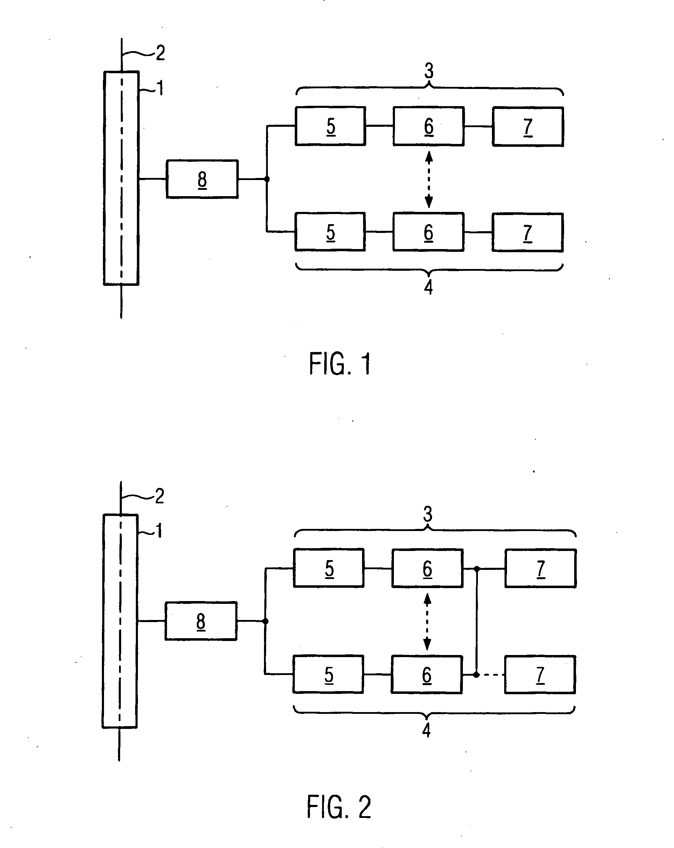

Figure 1 shows a part of a vehicle having a main body 1. This main body 1 has a longitudinal axis 2. The main body 1 of the vehicle can tilt around the longitudinal axis. An angle between a vertical plane through a longitudinal axis and a horizontal plane changes during the tilting action. The necessary force for the movement of the main body is applied by one tilting unit 3 and one tilting unit 4. Each tilting unit comprises an actuator 5, a control unit 6 and a power provision unit 7. In the embodiment of Fig. 1, the actuator is an electromotor. The control unit 6 comprises a power electronic unit and an electric circuit unit. The two control units 6 of the two tilting units 3 and 4 are wired to each other, so that information can be transmitted from one control unit 6 to the other control unit 6. A wiring is configured between the two electric circuit units.

In the embodiment of Fig. 1, the power is supplied by the power provision unit 7, namely a battery of each tilting unit 3 and 4.

Electric power is conducted from the battery to the electric circuit unit, then to the power electronic unit and then to the actuator, so that the actuator 5 of each tilting unit 3 and 4 is moved. The power provision unit is therefore in the embodiment shown in Fig. 1 an electric power storage.

As information between the two electric circuit units is exchanged, malfunction of either of the tilting units 3 or 4 is detectable and when this malfunction is detected, this event is brought to the immediate attention of the driver via electric cables or wires and a display device.

During malfunction, the non-malfunctioning actuator 5 of the not malfunctioning tilting unit 3 or 4 brings the necessary power for moving the main body 1 via a transducer 8. The transducer 8 is configured as a mechanical gear, such as a reduction gear. Each actuator 5 is coupled to the one transducer 8. The actuator 5 is in each tilting unit 3 or 4 configured as an electromotor. The electromotor therefore moves the reduction gear, so that tilting of the main body 1 is achieved.

In Fig. 2, another embodiment of the current invention is shown. For the same elements, the same reference numbers are used. Different to Fig. 1 and the embodiment therein, the power provision unit 7 in the first tilting unit 3 is a battery, as conventional and also used in the embodiment shown in Fig. 1, whereas the power provision unit 7 of the other tilting unit 4 is a mechanical energy converter. This mechanical energy converter consists of a generator, an AC/DC converter and a controller. A generator is a high voltage AC generator. The mechanical energy converter is attached to either control unit 6 of the tilting unit 3 and the tilting unit 4. The battery of the power provision 7 of the first tilting unit 3 is also connected to the tilting unit 4, especially to the control unit 6 in each of the tilting units 3 or 4.

In both embodiments, the power provision units 7 are connected to the power electronic unit.

In both embodiments, shown as Fig. 1 and Fig. 2, communication between the ECU's exists and is necessary to bring any malfunction to the attention of the driver and switch from one tilting unit to the other tilting unit.

In the embodiment of Fig. 2, the controller of the mechanical energy converter monitors the status and the charge status of the battery of the other of the tilting units 3 or 4. When the controller gets the information that the battery is failing or the charge is getting low, or even too low in the battery, the necessary energy is transmitted via the high voltage AC generator to the AC/DC converter, and then to either of the electric circuit units in tilting unit 3 and tilting unit 4. Therefore, both actuators 5, namely both electromotors, are powered and get the necessary energy to move via the transducer 8 the main body 1 of the vehicle around the longitudinal axis 2.

In these solutions, there are two actuators 5 to drive the tilting and the concept of redundancy on the tilting actuators 5 is considered. This concept is most important to assure the safety of the driver and the passenger in any vehicles where a by-wire system is present. If there is a failure in the control system or in the actuator, the tilting system can now work and the driver cannot lose control of the vehicle on a curb. This system is operative when the principal system does not work and it is a hot redundant system. Thereby, the wire-tilting servo system combines the tilting units 3 and 4 with the transducer 8, using the electromotors driven by an electronic control unit, and has good properties. The performance of the tilting mechanism, concerning acceleration and speed, can be easily changed by the torque of the electromotor. A rapid tilting actuation, which is necessary in sports driving, can be obtained with high torque provided by the electromotor or a smooth actuation, necessary for normal driving, is realized by limiting the motor torque. Therefore, the driver can choose the desired tilting behavior of the vehicle. Moreover, the ECU implements a closed loop control of the tilting, based on the measures of sensors, such as current sensors, accelerometers, and/or position sensors. It can also drive the motors concerning only the driver command, such as it is achieved by an open loop control. Therefore, the driver can choose, with a selector, the possibility of an automatic tilting control or a manual control. This feature is important to improve the driving feeling and the safety of the vehicle.

The electromotors are linked and parallel to a reduction gear that provides the torque to activate the tilting mechanism. When the system operates in normal conditions, the electromotors work together to provide torque to the reduction gear. If a failure occurs on an electromotor, the second can provide torque to activate tilting. A redundancy of power supply and of control units is achieved, so that the system is fault tolerant. The two power electronics, which is two electronic circuit units and two batteries, are included. In case of failure of one of these elements, the second chain assures the presence of torque on the reduction gear for safety driving of the tilting. The tilting servo system is fault tolerant and has hot redundant characteristics: with normal operation to change work together to produce the tilting torque, defined as hot redundancy, and, in case of failure, one chain assures a safety torque on the tilting mechanism, so that it is fault tolerant. An important characteristic of the servo system, including the tilting units 3 and 4 and the transducer 8, consists of the communication between the ECU's, represented in Fig. 1 and 2 by a dotted arrow. In case of failure in the upper chain, namely the tilting unit 3, the ECU of control unit 6 of tilting unit 3 informs the ECU of the other control unit 6 of the other tilting unit 4 of the malfunctioning or vice versa. Therefore, the lower chain assures the functionality of the tilting mechanism and the ECU of control unit 6 informs the driver of the presence of a failure in the system. The performance of the tilting with only one active chain can be reduced, but it assures safe driving of the vehicle and the drive can break it with safety conditions.

The only part of the described system which is not redundant, is the reduction gear. This element is a mechanical element, such as a steering shaft or a brake caliper. The laws in different countries do not impose a necessity to have a redundancy concerning the mechanical parts. For this reason, in the by-wire tilting servo system, only a reduction gear is included. However, two different forms of a transducer 8 would also be possible.

The second embodiment, shown in Fig. 2, has the further advantage to minimize the weight of the vehicle, as the batteries are very heavy. On of the batteries can be replaced by the mechanical energy converter as a power provision unit 7. In this embodiment, a high voltage AC generator is linked to a crank shaft of an internal combustion engine of the vehicle and an AC/DC converter. This converter must be driven by a control unit that monitors the status and the charge of the battery. This alternative solution has the redundant characteristics necessary to provide the solution for the problems discussed above. If a failure is present in the battery, it can be detected by the controller, that can react by excluding the battery in using the generator to directly supply the electromotors instead. In this case, the efficiency of the power supply is lower than the first embodiment, but it represents a back-up without using a second battery. The weight is lower than the first embodiment, at the cost of a higher complexity because an intelligent battery recharge must be implemented.

Another embodiment to further improves the safety of the vehicle is possible in the case the electric motors are with permanent magnets. In this case they can work as generators and transform mechanical power in electrical power. If their electric terminals are connected to a resistive network the electric power is dissipated. The result is that a torque is needed to rotate the shaft of the electric motors. The resistive network can be either realized by resistors or by the same control unit that can synthesize a resistive load of variable entity.

In this mode of operation, said "passive" mode, the tilting mechanism is no more able to impose a tilting of the vehicle, but it operates as a tilting damper and may improve the vehicle stability. In the "passive" mode the tilting is actuated by the driver by means of the steer action or by its lateral displacement on the vehicle.

No electrical power is required to the vehicle system, as the tilting actuator is operated in the "passive" mode. This guarantees the functionality of the vehicle even if no electrical power can be provided to the control units. The minimum amount of energy required to operate the control units may be provided by the same motors, used as generators.

By acting on the value of the shunt resistance the driver or the vehicle control unit can modify the amount of damping generated by the tilting actuator.

The invention has the advantage that no hydraulic fluid is necessary, and only electric actuators, such as electromotors can be used. This permits a better environmental impact of the vehicle. Also fault tolerant characteristics and a hot redundant system with two electromotors, which are working in parallel, are providable. In case of failure, the safety of the vehicle is assured. The possibility to choose an open loop or a closed loop control of the tilting of the vehicle is achievable. This improves the driving feeling of the vehicle for any drivers.

## Claims

1. A vehicle with a main body (1) having a longitudinal axis (2), and with a tilting unit (3, 4) for tilting the main body (1) relative to a vertical plain through the longitudinal axis (2), whereby the tilting unit (3, 4) comprises an actuator (5), a control unit (6) and a power provision unit (7) for providing a power transmitting medium via the control unit (6) to the actuator (5), whereby the control unit (6) is configured to control the power intake of the actuator (5), **characterized in** comprising at least two redundant tilting units (3, 4).

2. The vehicle according to claim 1, **characterized in that** the tilting unit (4) is an electronic device, preferably exclusively an electronic device.

3. The vehicle according to claim 1 or 2, **characterized in that** the actuator (5) comprises an electronic unit, such as an electromotor.

4. The vehicle according to one of the claims 1 - 3, **characterized in that** the control unit (6) comprises a power electric unit and/or an electric circuit unit (ECU).

5. The vehicle according to at least one of the claims 1 - 4, **characterized in that** the power provision unit comprises an electric power storage and/or a mechanical energy converter.

6. The vehicle according to claim 5, **characterized in that** the electric power storage comprises a battery.

7. The vehicle according to claim 5 or 6, **characterized in that** the mechanical energy converter comprises a high voltage AC generator and an AC/DC converter.

8. The vehicle according to claim 7, **characterized in that** the mechanical energy converter further comprises a controller for monitoring the status and/or charge condition of the battery.

9. The vehicle according to at least one of the claims 1 - 8, **characterized in that** the electric power storage and the mechanical energy converter of one of the two tilting units (3, 4) is also connected to the controller of the other tilting unit (3, 4).

10. The vehicle according to at least one of the claims 1 - 9, **characterized in that** the power transmitting medium is electricity or an electric current.

11. The vehicle according to claim 10, **characterized in that** the controller is configured to uncouple the battery from either of the control units (6) and supply electricity to either of the two control units (6) from the AC/DC converter and the generator.

12. The vehicle according to at least one of the claims 1 - 11, **characterized in that** the vehicle comprises a signaling element.

13. The vehicle according to at least one of the claims 1 - 12, **characterized in that** the control units, especially the electric circuit units, of the two tilting units (3, 4) are configured to communicate with each other, to assure the functionality of at least one of the two tilting units (3, 4).

14. The vehicle according to claim 12 or 13, **characterized in that** the signaling element is coupled to at least one electric circuit unit, preferably both, to signal a driver of the vehicle malfunction one or two trigger units (3, 4).

15. The vehicle according to at least one of the claims 1 - 14, **characterized in that** the vehicle comprises a transducer (8) coupled between the trigger units (3, 4) and the main body (1).

16. The vehicle according to claim 15, **characterized in that** one single transducer (8), such as a reduction gear, is coupled between the two trigger units (3, 4) on the one side and the main body (1) on the other side.

17. The vehicle according to claim 15 or 16, **characterized in that** the transducer (8) comprises a mechanical element.

18. The vehicle according to at least one of the claims 15 - 17, **characterized in that** a transducer (8) comprises a steering shaft.

19. The vehicle according to at least one of the claims 15 - 18, **characterized in that** a transducer (8) comprises a brake caliper.

20. The vehicle according to at least one of the claims 1 - 19, **characterized in that** the vehicle comprises a first mode switch to choose between a manual or an automatic tilting mode.

21. The vehicle according to at least one of the claims 1 - 20, **characterized in that** the vehicle comprises a second mode switch to select the acceleration and/or speed of the tilting unit (2, 3) tilting the vehicle.

22. The vehicle according to at least one of the claim 21, **characterized in that** the second mode switch is configured to change the torque of the actuator (5), especially the electric motor.

23. The vehicle according to at least one of the claims 4 - 22, **characterized in that** the vehicle comprises at least one sensor, such as a current sensor, an accelerometer, and/or a position sensor to deliver data concerning the actual state of the vehicle to one of the control units (6), preferably especially one of the electric circuit units.

24. The vehicle according to claim 23, **characterized in that** the sensor is coupled to both electric units.

25. The vehicle according to at least one of the claims 4 - 24, **characterized in that** the electric circuit unit is configured as an open loop control.

26. The vehicle according to at least one of the claims 4 - 24, **characterized in that** the electric unit is configured as a closed loop control.

27. The vehicle according to at least one of the claims 4 - 24, **characterized in that** both electric circuit units are configured as an open loop control or a closed loop control.

28. The vehicle according to at least one of the claims 1 - 27, **characterized in that** the tilting unit (2, 3) comprises a recharge unit configured to recharge the power provision unit (7).

## Patentansprüche

1. Fahrzeug mit einem Hauptkörper (1), der eine Längsachse (2) hat, sowie mit einer Neigeeinheit (3, 4) zum Neigen des Hauptkörpers (1) relativ zu einer vertikalen Ebene durch die Längsachse (2), wobei die Neigeeinheit (3, 4) ein Betätigungselement (5), eine Steuereinheit (6) und eine Energieversorgungseinheit (7) umfasst , die das Betätigungselement (5) über die Steuereinheit (6) mit einem Energieübertragungsmedium versorgt, und die Steuereinheit (6) so konfiguriert ist, dass sie den Energieeingang des Betätigungselementes (5) steuert, **dadurch gekennzeichnet, dass** es wenigstens zwei redundante Neigeinheiten (3, 4) umfasst.

2. Fahrzeug nach Anspruch 1, **dadurch gekennzeichnet, dass** die Neigeeinheit (4) eine elektronische Vorrichtung, vorzugsweise ausschließlich eine elektronische Vorrichtung, ist.

3. Fahrzeug nach Anspruch 1 oder 2, **dadurch gekennzeichnet, dass** das Betätigungselement (5) eine elektronische Einheit, wie beispielsweise einen Elektromotor, umfasst.

4. Fahrzeug nach einem der Ansprüche 1-3, **dadurch gekennzeichnet, dass** die Steuereinheit (6) eine Stromkreiseinheit und/oder eine elektrische Schaltungseinheit (ECU) umfasst.

5. Fahrzeug nach wenigstens einem der Ansprüche 1-4, **dadurch gekennzeichnet, dass** die Energieversorgungseinheit einen Stromspeicher und/oder eine Einrichtung zum Umwandeln mechanischer Energie umfasst.

6. Fahrzeug nach Anspruch 5, **dadurch gekennzeichnet, dass** der Stromspeicher eine Batterie umfasst.

7. Fahrzeug nach Anspruch 5 oder 6, **dadurch gekennzeichnet, dass** die Einrichtung zum Umwandeln mechanischer Energie einen Hochspannungs-Wechselstromgenerator und einen Wechselstrom-Gleichstrom-Wandler umfasst.

8. Fahrzeug nach Anspruch 7, **dadurch gekennzeichnet, dass** die Einrichtung zum Umwandeln mechanischer Energie des Weiteren eine Steuereinrichtung zum Überwachen des Status und/oder des Ladezustandes der Batterie umfasst.

9. Fahrzeug nach wenigstens einem der Ansprüche 1-8, **dadurch gekennzeichnet, dass** der Stromspeicher und die Einrichtung zum Umwandeln mechanischer Energie einer der zwei Neigeeinheiten (3, 4) auch mit der Steuereinheit der anderen Neigeeinheit (3, 4) verbunden ist.

10. Fahrzeug nach wenigstens einem der Ansprüche 1-9, **dadurch gekennzeichnet, dass** das Energieübertragungsmedium Elektrizität oder ein elektrischer Strom ist.

11. Fahrzeug nach Anspruch 10, **dadurch gekennzeichnet, dass** die Steuereinrichtung so eingerichtet ist, dass sie die Batterie von einer der beiden Steuereinheiten (6) trennt und einer der zwei Steuereinheiten (6) Elektrizität von dem Wechselstrom-Gleichstrom-Wandler und dem Generator zuführt.

12. Fahrzeug nach wenigstens einem der Ansprüche 1-11, **dadurch gekennzeichnet, dass** das Fahrzeug ein Signalisierungselement umfasst.

13. Fahrzeug nach wenigstens einem der Ansprüche 1-12, **dadurch gekennzeichnet, dass** die Steuereinheiten, insbesondere die elektrischen Schaltungseinheiten der zwei Neigeeinheiten (3, 4), so eingerichtet sind, dass sie miteinander kommunizieren, um die Funktionalität wenigstens einer der Neigeeinheiten (3, 4) sicherzustellen.

14. Fahrzeug nach Anspruch 12 oder 13, **dadurch gekennzeichnet, dass** das Signalisierungselement mit wenigstens einer, vorzugsweise beiden, elektrischen Schaltungseinheit/en verbunden ist, um einem Fahrer des Fahrzeugs Fehlfunktion von ein oder zwei Auslösereinheit/en (3, 4) zu signalisieren.

15. Fahrzeug nach wenigstens einem der Ansprüche 1-14, **dadurch gekennzeichnet, dass** das Fahrzeug einen Wandler (8) umfasst, der zwischen die Auslöseeinheiten (3, 4) und den Hauptkörper (1) gekoppelt ist.

16. Fahrzeug nach Anspruch 15, **dadurch gekennzeichnet, dass** ein einzelner Wandler (8), wie beispielsweise ein Untersetzungsgetriebe, zwischen die zwei Auslöseeinheiten (3, 4) an der einen Seite und den Hauptkörper (1) an der anderen Seite gekoppelt ist.

17. Fahrzeug nach Anspruch 15 oder 16, **dadurch gekennzeichnet, dass** der Wandler (8) ein mechanisches Element umfasst.

18. Fahrzeug nach wenigstens einem der Ansprüche 15-17, **dadurch gekennzeichnet, dass** der Wandler (8) eine Lenkwelle umfasst.

19. Fahrzeug nach wenigstens einem der Ansprüche 15-18, **dadurch gekennzeichnet, dass** der Wandler (8) einen Bremssattel umfasst.

20. Fahrzeug nach wenigstens einem der Ansprüche 1-19, **dadurch gekennzeichnet, dass** das Fahrzeug einen ersten Modusschalter zum Wählen zwischen einem manuellen oder einem automatischen Neigemodus umfasst.

21. Fahrzeug nach wenigstens einem der Ansprüche 1-20, **dadurch gekennzeichnet, dass** das Fahrzeug einen zweiten Modusschalter zum Auswählen der Beschleunigung und/oder der Geschwindigkeit der Neigeeinheit (2, 3) umfasst, die das Fahrzeug neigt.

22. Fahrzeug nach Anspruch 21, **dadurch gekennzeichnet, dass** der zweite Modusschalter so eingerichtet ist, dass er das Drehmoment des Betätigungselementes (5), insbesondere des Elektromotors, ändert.

23. Fahrzeug nach wenigstens einem der Ansprüche 4-22, **dadurch gekennzeichnet, dass** das Fahrzeug wenigstens einen Sensor, wie beispielsweise einen Stromsensor, einen Beschleunigungsmesser und/oder einen Positionssensor umfasst, mit dem Daten, die den Istzustand des Fahrzeugs betreffen, einer der Steuereinheit (6), vorzugsweise insbesondere einer der elektrischen Schaltungseinheiten, zugeführt werden.

24. Fahrzeug nach Anspruch 23, **dadurch gekennzeichnet, dass** der Sensor mit beiden elektrischen Einheiten gekoppelt ist.

25. Fahrzeug nach wenigstens einem der Ansprüche 4-24, **dadurch gekennzeichnet, dass** die elektrische Schaltungseinheit als eine Steuereinrichtung konfiguriert ist.

26. Fahrzeug nach wenigstens einem der Ansprüche 4-24, **dadurch gekennzeichnet, dass** die elektrische Einheit als eine Regeleinrichtung konfiguriert ist.

27. Fahrzeug nach wenigstens einem der Ansprüche 4-24, **dadurch gekennzeichnet, dass** beide elektrischen Schaltungseinheiten als eine Steuereinrichtung oder eine Regeleinrichtung konfiguriert sind.

28. Fahrzeug nach wenigstens einem der Ansprüche 1-27, **dadurch gekennzeichnet, dass** die Neigeeinheit (2, 3) eine Aufladeeinheit umfasst, die zum Aufladen der Energieversorgungseinheit (7) eingerichtet ist.

## Revendications

1. Véhicule avec un corps principal (1) ayant un axe longitudinal (2), et une unité d'inclinaison (3, 4) pour incliner le corps principal (1) par rapport à un plan vertical qui traverse l'axe longitudinal (2), l'unité d'inclinaison (3, 4) comprenant un actionneur (5), une unité de commande (6) et une unité d'alimentation en énergie (7) pour fournir à l'actionneur (5) un moyen de transmission d'énergie par l'intermédiaire de l'unité de commande (6), et l'unité de commande (6) étant conçue pour commander l'alimentation en énergie de l'actionneur (5), **caractérisé en ce qu'**il comprend au moins deux unités d'inclinaison redondantes (3, 4).

2. Véhicule selon la revendication 1, **caractérisé en ce que** l'unité d'inclinaison (4) est constituée par un appareil électronique, de préférence exclusivement par un appareil électronique.

3. Véhicule selon la revendication 1 ou 2, **caractérisé en ce que** l'actionneur (5) comprend une unité électronique telle qu'un moteur électrique.

4. Véhicule selon l'une des revendications 1 à 3, **caractérisé en ce que** l'unité de commande (6) comprend une unité électrique d'énergie et/ou une unité de circuit électrique.

5. Véhicule selon l'une au moins des revendications 1 à 4, **caractérisé en ce que** l'unité d'alimentation en énergie comprend un accumulateur d'énergie électrique et/ou un convertisseur d'énergie mécanique.

6. Véhicule selon la revendication 5, **caractérisé en ce que** l'accumulateur d'énergie électrique comprend une batterie.

7. Véhicule selon la revendication 5 ou 6, **caractérisé en ce que** le convertisseur d'énergie mécanique comprend un générateur de courant alternatif haute tension et un convertisseur courant alternatif/courant continu.

8. Véhicule selon la revendication 7, **caractérisé en ce que** le convertisseur d'énergie mécanique comprend par ailleurs un organe de contrôle pour surveiller l'état et/ou la condition de charge de la batterie.

9. Véhicule selon l'une au moins des revendications 1 à 8, **caractérisé en ce que** l'accumulateur d'énergie électrique et le convertisseur d'énergie mécanique de l'une des deux unités d'inclinaison (3, 4) sont également reliés à l'organe de contrôle de l'autre unité d'inclinaison (3, 4) .

10. Véhicule selon l'une au moins des revendications 1 à 9, **caractérisé en ce que** le moyen de transmission d'énergie est constitué par de l'électricité ou un courant électrique.

11. Véhicule selon la revendication 10, **caractérisé en ce que** l'organe de contrôle est conçu pour désaccoupler la batterie de l'une des unités de commande (6) et alimenter en électricité l'une des deux unités de commande (6) à partir du convertisseur courant alternatif/courant continu et du générateur.

12. Véhicule selon l'une au moins des revendications 1 à 11, **caractérisé en ce qu'**il comporte un élément de signalisation.

13. Véhicule selon l'une au moins des revendications 1 à 12, **caractérisé en ce que** les unités de commande, spécialement les unités de circuit électrique, des deux unités d'inclinaison (3, 4) sont conçues pour communiquer entre elles, afin d'assurer le fonctionnement de l'une au moins des deux unités d'inclinaison-(3, 4).

14. Véhicule selon la revendication 12 ou 13, **caractérisé en ce que** l'élément de signalisation est couplé à au moins une unité de circuit électrique, de préférence aux deux, pour signaler à un conducteur du véhicule un dysfonctionnement d'une ou deux unités de déclenchement (3, 4).

15. Véhicule selon l'une au moins des revendications 1 à 14, **caractérisé en ce que** le véhicule comporte un transducteur (8) monté entre les unités de déclenchement (3, 4) et le corps principal (1).

16. Véhicule selon la revendication 15, **caractérisé en ce qu'**un transducteur (8) unique, tel qu'un réducteur, est monté entre les deux unités de déclenchement (3, 4), d'une part, et le corps principal (1), d'autre part.

17. Véhicule selon la revendication 15 ou 16, **caractérisé en ce que** le transducteur (8) comporte un élément mécanique.

18. Véhicule selon l'une au moins des revendications 15 à 17, **caractérisé en ce qu'**un transducteur (8) comporte un axe de direction.

19. Véhicule selon l'une des revendications 15 à 18, **caractérisé en ce qu'**un transducteur (8) comporte un étrier de frein.

20. Véhicule selon l'une au moins des revendications 1 à 19, **caractérisé en ce qu'**il comporte un premier commutateur de mode pour une sélection entre un mode d'inclinaison manuel et un mode d'inclinaison automatique.

21. Véhicule selon l'une au moins des revendications 1 à 20, **caractérisé en ce qu'**il comporte un second commutateur de mode pour sélectionner l'accélération et/ou la vitesse de l'unité d'inclinaison (2, 3) qui incline le véhicule.

22. Véhicule selon au moins la revendication 21, **caractérisé en ce que** le second commutateur de mode est conçu pour modifier le couple de l'actionneur (5), spécialement du moteur électrique.

23. Véhicule selon l'une au moins des revendications 4 à 22, **caractérisé en ce qu'**il comporte au moins un capteur tel qu'un capteur de courant, un accéléromètre et/ou un capteur de position pour fournir des données concernant l'état réel du véhicule à l'une des unités de commande (6), de préférence spécialement à l'une des unités de circuit électrique.

24. Véhicule selon la revendication 23, **caractérisé en ce que** le capteur est couplé aux deux unités électriques.

25. Véhicule selon l'une au moins des revendications 4 à 24, **caractérisé en ce que** l'unité de circuit électrique est conçue comme une commande en boucle ouverte.

26. Véhicule selon l'une au moins des revendications 4 à 24, **caractérisé en ce que** l'unité électrique est conçue comme une commande en boucle fermée.

27. Véhicule selon l'une au moins des revendications 4 à 24, **caractérisé en ce que** les deux unités de circuit électrique sont conçues comme une commande en boucle ouverte ou comme une commande en boucle fermée.

28. Véhicule selon l'une au moins des revendications 1 à 27, **caractérisé en ce que** l'unité d'inclinaison (2, 3) comporte une unité de rechargement conçue pour recharger l'unité d'alimentation en énergie (7).
